(19) Europäisches Patentamt
European Patent Office
Office européen des brevets

(11) **EP 2 991 207 A1**

(12) **EUROPÄISCHE PATENTANMELDUNG**

(43) Veröffentlichungstag:
02.03.2016  Patentblatt 2016/09

(51) Int Cl.:
*H02K 29/03* (2006.01)     *H02K 1/24* (2006.01)
*H02K 1/27* (2006.01)      *H02K 16/02* (2006.01)
*H02K 19/10* (2006.01)

(21) Anmeldenummer: 14182766.7

(22) Anmeldetag: **29.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Serna-Calvo, Eva Teresa, Dr.**
**97616 Bad Neustadt (DE)**
• **Vollmer, Rolf**
**36129 Gersfeld (DE)**

(54) **Dynamoelektrische Maschine mit Reluktanz- und Permanentmagnetrotor**

(57) Die Erfindung betrifft einen Rotor (3) einer dynamoelektrischen Maschine (1), der um eine Achse (5) drehbar ist, wobei sich der Rotor (3) aus zumindest drei axialen hintereinander angeordneten unmittelbar aneinandergrenzenden Abschnitten I bis III zusammensetzt, wobei der Rotor (3) durch zumindest zwei unterschiedliche Rotorteilpakettypen (9,10) gebildet ist.

FIG 2

EP 2 991 207 A1

**Beschreibung**

Die Erfindung betrifft einen Rotor einer dynamoelektrischen Maschine, der um eine Achse drehbar ist, wobei sich der Rotor axial hintereinander angeordnete Reluktanz- und Permanentmagnetabschnitte aufweist. Des Weiteren betrifft die Erfindung eine dynamoelektrische Maschine mit einem Rotor und die Anwendung einer derartigen Maschine.

Dynamoelektrische Maschinen weisen einen Rotor auf, über den ein Drehmoment an eine Arbeitsmaschine weitergegeben wird oder über den z.B. im generatorischen Betrieb der dynamoelektrischen Maschine die Umformung in elektrische Energie erfolgt. Nachteilig dabei ist, dass jeder Rotortyp, d.h. permanenterregte Rotoren, elektrisch erregte Rotoren, Käfigläuferrotoren, Reluktanzrotoren, Nachteile aufweisen, die unter anderem den Betrieb mit der Arbeitsmaschine bzw. die Energiegewinnung erschweren.

So wurden bisher Rotorstrukturen geschaffen, die Magnete im Rotorblech zeigen und zusätzlich mit einem Reluktanzteilpaket versehen sind. Nachteilig ist dabei weiterhin, die vergleichsweise zu hohe Drehmomentwelligkeit und die vergleichsweise zu geringe Leistungsdichte der dynamoelektrischen Maschine.

Ausgehend davon liegt der Erfindung die Aufgabe zugrunde, einen Rotor einer dynamoelektrischen Maschine zu schaffen, der eine vergleichsweise geringe Drehmomentwelligkeit bei vergleichsweise hoher Leistungsdichte der dynamoelektrischen Maschine gewährleistet.

Die Lösung der gestellten Aufgabe gelingt durch einen Rotor einer dynamoelektrischen Maschine der um eine Achse drehbar ist, wobei sich der Rotor aus zumindest drei axialen hintereinander angeordneten unmittelbar aneinandergrenzenden Abschnitten I bis III zusammensetzt, wobei der Rotor durch zumindest zwei unterschiedliche Rotorteilpaketarten gebildet ist.

Durch den erfindungsgemäßen Aufbau sind nunmehr zumindest drei unmittelbar hintereinander angeordnete Abschnitte vorgesehen, die durch zumindest zwei unterschiedliche Rotorteilpaketarten gebildet sind. Damit lassen sich die Vorteile sowohl des einen Rotorteilpakets als auch des anderen Rotorteilpakets in der dynamoelektrischen Maschine verwirklichen. Vorteilhafterweise sind dabei die Rotorteilpaketarten als Reluktanzpakete oder Permanentmagnetpaket ausgebildet. Dies schafft eine vergleichsweise geringe Drehmomentwelligkeit und gewährleistet je nach Anwendungstyp eine vergleichsweise hohe Leistungsdichte. Die axiale Länge dieser Abschnitte der Rotorteilpaketarten lässt sich je nach Anwendungsfall variieren, so dass einem Anwender ein optimales Antriebskonzept zur Verfügung gestellt werden kann.

Vorteilhafterweise ist das Reluktanzpaket zwischen zwei Permanentmagnetpaketen angeordnet, wobei dadurch die Permanentmagnetpakete zusätzlich der axialen Fixierung der Bleche des Reluktanzpakets dienen.

Vorteilhafterweise kann nun durch das erfinderische Prinzip des Rotors jeder Abschnitt des Rotors für sich jeweils optimiert werden. Damit sind in Summe höhere Drehmomente und Leistungen der dynamoelektrischen Maschine abrufbar. Zusätzlich erlaubt der Aufbau mit Oberflächenmagneten am Permanentmagnetpaket und eine Bandage höchste Drehzahlen und kann somit aufgrund der geringen Induktivität dieses Aufbaus die höchsten Grenzdrehmomente bei vorgegebener Spannung gewährleisten.

Um zusätzlich die Drehmomentwelligkeit zu reduzieren, werden die Permanentmagnetpakete in weitere vorgebbare Unterteilpakete aufgeteilt, wobei jedes Unterteilpaket um einen vorgegebenen Winkel gegenüber dem vorhergehenden Unterteilpaket dieses Permanentmagnetpakets in Umfangsrichtung versetzt angeordnet ist, so dass sich eine Staffelung über die axiale Länge dieses Permanentmagnetpakets ergibt.

Das Reluktanzpaket wird vorzugsweise durch Ausstanzungen im Blechpaket dieses Rotorteils gebildet, in dem Flusssperren gebildet werden. Dabei ist es vorteilhaft, dass insbesondere bei höheren Drehzahlen die Bandage ausgehend vom Permanentmagnetpaket auch über diese Reluktanzpaket geführt wird, um die Fliehkraftbeanspruchungen aufnehmen zu können.

In einer vorteilhaften Ausführungsform weist das Reluktanzpaket anstatt Flusssperren in diesem Paket anisotrop weichmagnetisches Material auf, das in sich eine höhere Festigkeit hat und ebenso einen Reluktanzeffekt aufweist.

Unter anisotrop weichmagnetisches Material wird dabei ein Material verstanden, das nur in einer Raumrichtung eine vergleichsweise gute magnetische Leitfähigkeit ($\mu_r$>20) hat und in den anderen Raumrichtungen eine vergleichsweise schlechte magnetische Leitfähigkeit ($\mu_r$< 5).

Um auch die Drehmomentwelligkeit des Reluktanzpaket zu reduzieren, wird das Reluktanzpaket mit einem Zentriwinkel $\beta$ geschrägt. Die Polzahl der Rotorteilpakete ist gleich, was die Effizienz des gesamten Antriebs erhöht. Da zwar jedes Rotorteilpaket für sich optimiert ist aber zusätzlich die einzelnen Rotorteilpakete aufeinander abgestimmt sind.

Ebenso werden die Rotorteilpakete um einen Winkel $\gamma$ in Umfangsrichtung gegeneinander versetzt angeordnet, um die Drehmomentcharakteristik des gesamten Motors zu verbessern. Diesem Aufbau liegt die Erkenntnis zugrunde, dass das maximale Drehmoment der unterschiedlichen Rotorteilpaketarten bei unterschiedlichem Polradwinkel einsetzt. Um diesen Drehmomentverlauf für den gesamten Antrieb zu optimieren und das maximale Drehmoment aus der Anordnung zu erhalten, werden diesbezüglich die Rotorteilpaketarten gegeneinander um einen Winkel $\gamma$ ersetzt. Dieser Winkel $\gamma$ ist vor dem gewünschten Betriebsverhalten abhängig. Bei Anwendung einer bevorzugten Drehrichtung des Motors wird ein Winkel $\gamma$=45°/p gebildet, wobei p die Polpaarzahl ist. Damit wird das abzugebende Drehmoment der dynamoelektrischen Maschine insgesamt maximiert.

Eine derartige dynamoelektrische Maschine mit einem erfindungsgemäßen Rotor weist damit eine geringe Drehmomentwelligkeit bei einer maximalen Drehmomentausbeute und ein somit mit hoher Leistungsdichte auf. Damit eignet sich eine derartige dynamoelektrische Maschine insbesondere für Antriebe bei der Elektromobilität oder auch für High-Speed-Generatoren.

Die Erfindung sowie weitere vorteilhafte Ausgestaltungen der Erfindung sind den folgenden Ausführungsbeispielen zu entnehmen. Darin zeigen:

FIG 1         einen Längsschnitt durch eine dynamoelektrische Maschine,

FIG 2         einen erfindungsgemäßen Rotor,

FIG 3         Querschnitt durch einen Permanentmagnetpaket,

FIG 4         Querschnitt durch ein Reluktanzpaket,

FIG 5         ein Permanentmagnetpaket in perspektivischer Darstellung,

FIG 6         Reluktanzpaket in perspektivischer Darstellung,

FIG 7         Anordnungen von Permanentmagnetpaket und Reluktanzpaket,

FIG 8 und 9   Stand der Technik.

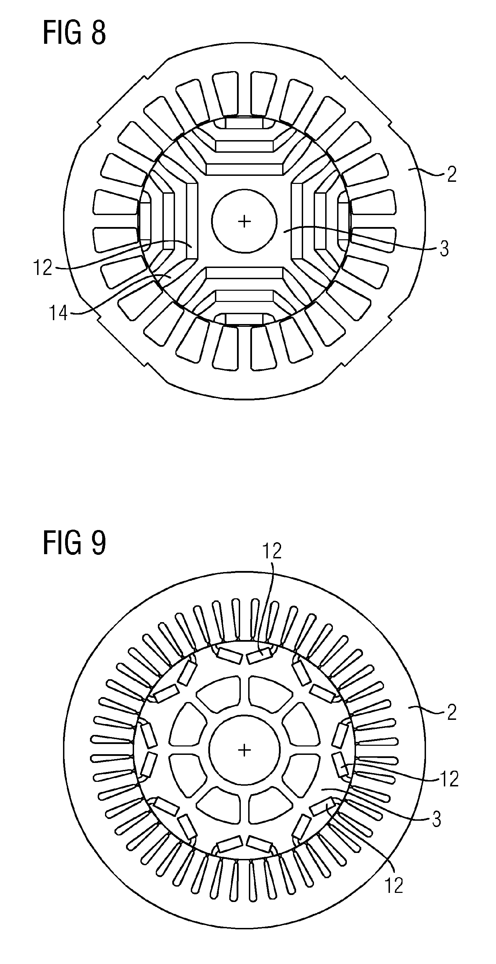

FIG 8 zeigt einen Reluktanzmotor mit Magnetunterstützung, wobei in den Flusssperren 14 zusätzliche Permanentmagnete 12 angeordnet sind.

Des Weiteren zeigt FIG 9 einen bekannten Rotortyp, bei dem Permanentmagnete 12 pro Pol eine V-Anordnung bilden und durch ihre Anordnung eine zusätzliche Reluktanzunterstützung erhalten.

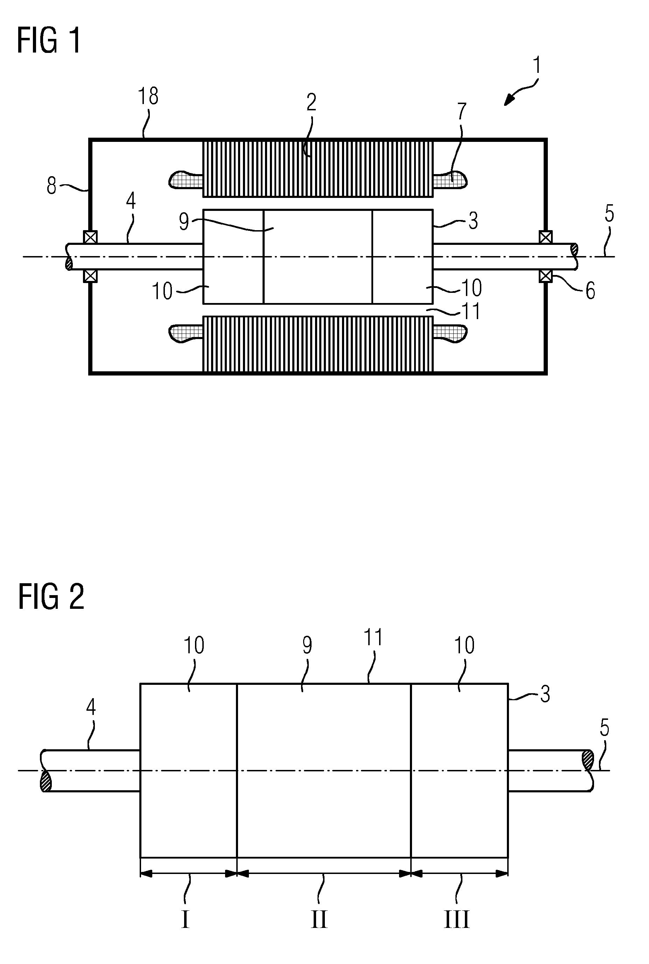

FIG 1 zeigt in einem Längsschnitt eine prinzipielle Darstellung einer erfindungsgemäßen dynamoelektrischen Maschine 1 mit einem Stator 2, in dem ein nicht näher dargestelltes Wicklungssystem vorgesehen ist, das an den Stirnseiten des Stators 2 Wickelköpfe 7 ausbildet.

Der Stator 2 ist in einem Gehäuse 18 angeordnet. Des Weiteren zeigt FIG 1 einen erfindungsgemäßen Rotor 3 mit drei unmittelbar axial aneinandergrenzenden Abschnitten, die auf einer Welle 4 positioniert sind, wobei die Welle 4 durch Lager 6 und dementsprechende Lagerschilde 8 gehalten ist.

Dabei weist der mittlere Abschnitt ein Reluktanzpaket 9 und die benachbarten Abschnitte weisen je ein Permanentmagnetpaket 10 auf. Der Rotor 3 weist eine Bandage 11 zur Fixierung der Pakete 9, 10 auf.

FIG 2 zeigt den Rotor 3 in einer etwas detaillierteren Darstellung, wobei hier die Permanentmagnetpakete 10 im Vergleich zu ihrer axialen Ausdehnung geringer ausgeführt sind als in FIG 1. Die jeweils unterschiedliche axiale Ausdehnung der Permanentmagnetpakete 10 und Reluktanzpakete 9 hängt vom jeweiligen Anwendungsfall und vom angestrebten Betriebsverhalten der dynamoelektrischen Maschine 1 ab.

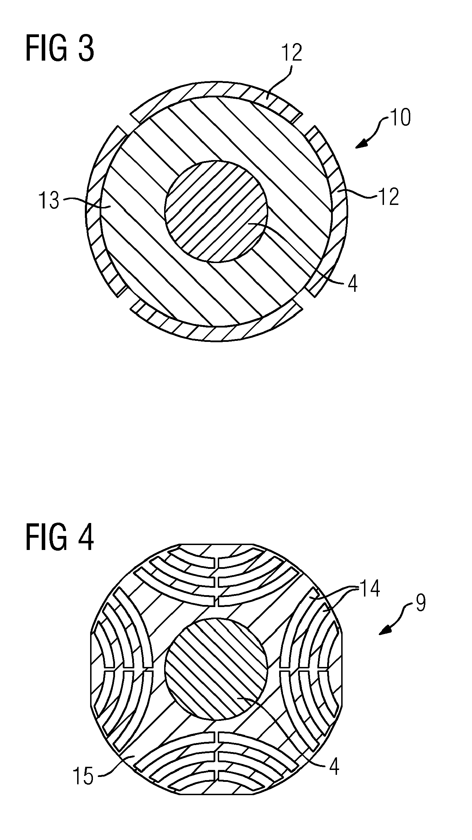

FIG 3 zeigt einen prinzipiellen Querschnitt durch ein Permanentmagnetpaket 10, das vierpolig aufgebaut ist und die Pole jeweils von einem Permanentmagneten 12 gebildet werden, der schalenförmig ausgeführt ist. Radial nach innen schließt sich ein Blechpaket 13 des Permanentmagnetpakets 10 an. Dieses Blechpaket 13 ist auf der Welle 4 drehfest fixiert.

Die Permanentmagneten 12 des Permanentmagnetpakets 10 in dieser als auch in den anderen Ausführungsformen können auch anders ausgeführt sein. Dabei eignen sich auch quaderförmige, nur auf einer Seite bogenförmige und trapezförmige Permanentmagnete 12. Des Weiteren kann das Permanentmagnetpakets 10 mit Oberflächenmagneten oder vergrabenen Magnete ausgeführt sein.

FIG 4 zeigt ein Reluktanzpaket 9 mit den Ausstanzungen in den Blechen 15, die Flusssperren bilden und somit ein Reluktanzmoment hervorrufen. Der Querschnitt zeigt weiter, dass das Reluktanzpaket 9 vierpolig ausgeführt ist und das Blechpaket 15 auf der Welle 4 positioniert ist. Das Reluktanzpaket 9 kann selbstverständlich auch sechs, acht, zehn, oder mehrpolig ausgeführt sein.

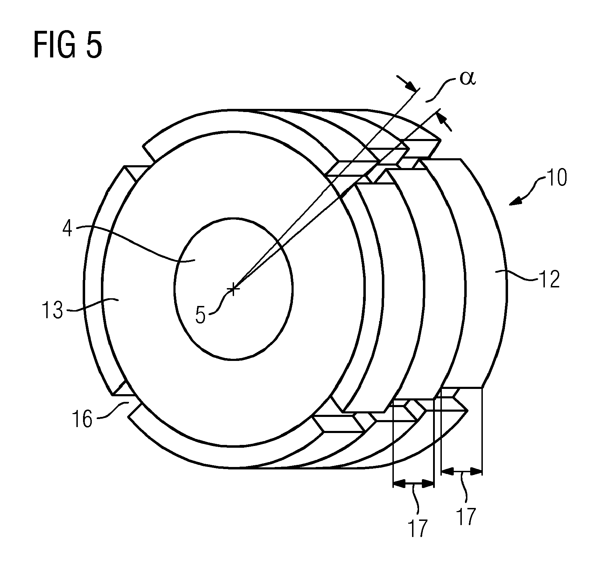

FIG 5 zeigt ein Permanentmagnetpaket 10 mit seinen Unterteilpaketen 17, die jeweils einen Versatzwinkel $\alpha$ zueinander bilden. Dieser Versatzwinkel ist abhängig von der Nutzahl des Stators 2. Es gilt prinzipiell ein Zusammenhang, dass

$$\alpha = 360°/N1/k$$

ist,

wobei k die Anzahl der Unterteilpakete dieses Permanentmagnetpaket 10 und N1 die Anzahl der Statornuten ist.

Dieser Aufbau reduziert weiter die Drehmomentwelligkeit des gesamten Antriebs. Die Permanentmagnete 12 der Unterteilpakete 17 sind in Umfangsrichtung betrachtet durch Pollücken 16 voneinander getrennt.

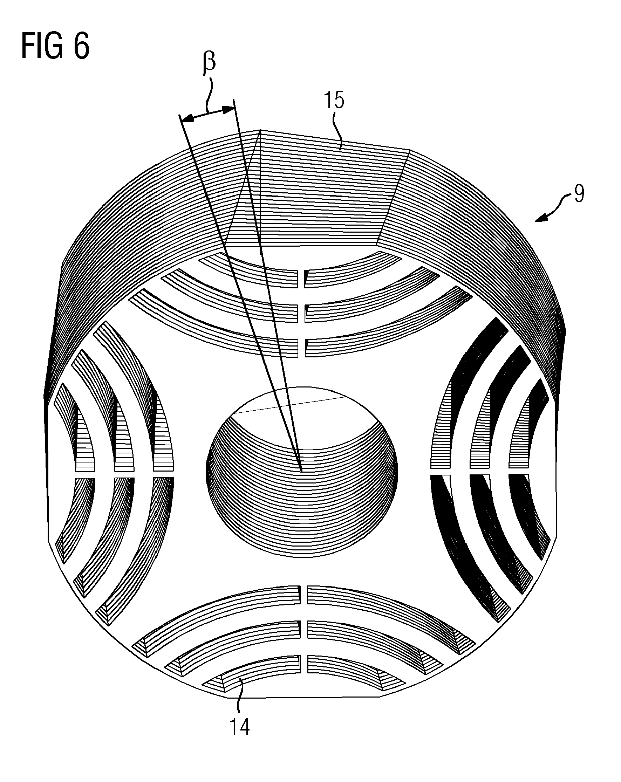

FIG 6 zeigt in perspektivischer Darstellung ein Reluktanzpaket 9, das über seinen axialen Verlauf eine Schrägung $\beta$ aufweist. Diese Schrägung $\beta$ ist optional und kann für eine weitere Reduzierung der Drehmomentwelligkeit eingesetzt werden. Es gilt ebenso der Zusammenhang, dass

$$\beta=360°/N1$$

ist,

wobei die N1 die Anzahl der Statornuten ist.

Des Weiteren sind dort die Flusssperren 14 zu sehen, die in diesem Fall als Ausnehmungen bzw. Ausstanzungen ausgeführt sind und somit nicht mit weiteren Materialien bestückt sind. Damit wird die die Trägheit des jeweiligen Pakets uns somit des Rotors 3 vergleichsweise gering. Es ist durchaus denkbar, dass die Flusssperren des Reluktanzpakets 9 auch mit einem dementsprechenden amagnetischen Material gefüllt sind.

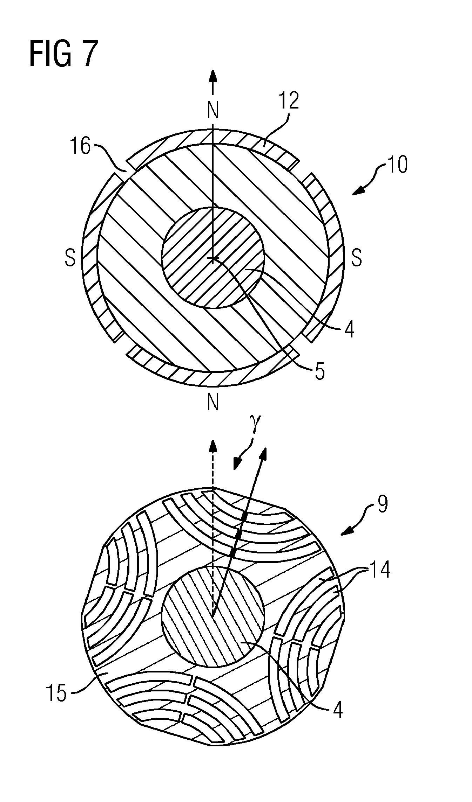

FIG 7 zeigt in einer übereinander angeordneten Anordnung die Ausrichtung der unterschiedlichen Rotorteilpakete - in der oberen Darstellung das vierpolige Permanentmagnetpaket 10 und in der unteren Darstellung das vierpolige Reluktanzpakets 9. Wobei der Winkel γ zwischen den Ausrichtungen der Pole von dem gewünschten Betriebsverhalten der dynamoelektrischen Maschine 1 abhängig ist. Dieser Winkel γ kann bei der Optimierung des Gesamtantriebs eingestellt werden und errechnet sich aus:

$$\gamma = 45°/p$$

wobei p die Polpaarzahl ist. Damit kann das Drehmoment der dynamoelektrischen Maschine maximiert werden.

Das bedeutet in einem Aufbau gemäß FIG 1, dass nunmehr - von links nach rechts betrachtet - zunächst das Permanentmagnetpaket 10 angeordnet ist, danach wird um den Winkel +γ (im Uhrzeigersinn) versetzt das Reluktanzpaket 9 angeordnet und im Anschluss daran wird ein weiteres Permanentmagnetpaket 10 wieder mit dem Winkel zurück, also -γ (im Gegenuhrzeigersinn) auf der Welle 4 positioniert.

Derartige Anordnungen eignen sich besonders als Antriebe für E-Cars, da eine geringe Drehmomentwelligkeit bei einer hohen Leistungsdichte in einfacher Art und Weise vorgesehen werden kann. Ebenso ist diese dynamoelektrische Maschine 1 auch für Anwendungen im hohen Drehzahlbereich vorzusehen, da idealerweise und relativ einfach eine Bandage über den ganzen Rotor 3 aufgebracht werden kann, die dann sowohl Permanentmagnete des Permanentmagnetpakets 10 als auch die Flusssperren bzw. des anisotrop weichmagnetische Material des Reluktanzpakets 9 zusammenhält.

**Patentansprüche**

1. Rotor (3) einer dynamoelektrischen Maschine (1), der um eine Achse (5) drehbar ist, wobei sich der Rotor (3) aus zumindest drei axialen hintereinander angeordneten unmittelbar aneinandergrenzenden Abschnitten I bis III zusammensetzt, wobei der Rotor (3) durch zumindest zwei unterschiedliche Rotorteilpaketarten (9,10) gebildet ist.

2. Rotor (3) nach Anspruch 1, **dadurch gekennzeichnet, dass** die Rotorteilpaketarten Reluktanzpakete (9) und Permanentmagnetpakete (10) sind.

3. Rotor (3) nach einem der vorhergehenden Ansprüche, **dadurch gekennzeichnet, dass** zwischen zwei Permanentmagnetpaketen ein Reluktanzpaket (9) angeordnet ist.

4. Rotor (3) nach einem der vorhergehenden Ansprüche, **dadurch gekennzeichnet, dass** die Permanentmagnetpakete (10) außenliegende Permanentmagnete (12) aufweisen.

5. Rotor (3) nach Anspruch 4, **dadurch gekennzeichnet, dass** das Permanentmagnetpaket (10) weitere Unterteilpakete (17) aufweist, so dass eine Staffelung eines vorgebbaren Winkels über die axiale Länge des jeweiligen Permanentmagnetpakets (10) einstellt.

6. Rotor (3) nach einem der vorhergehenden Ansprüche, **dadurch gekennzeichnet, dass** das Reluktanzpaket (9) Aussparungen innerhalb seines Blechpakets (15) aufweist, um Flusssperren zu generieren.

7. Rotor (3) nach einem der Ansprüche 1 bis 5, **dadurch gekennzeichnet, dass** das Reluktanzpaket (9) anisotrop weichmagnetische Materialien aufweist.

8. Rotor (3) nach einem der vorhergehenden Ansprüche, **dadurch gekennzeichnet, dass** das Reluktanzpaket (9) um einen Zentriwinkel β geschrägt ist.

9. Rotor (3) nach einem der vorhergehenden Ansprüche, **dadurch gekennzeichnet, dass** die Polzahl der Rotorteilpakete (9,10) insbesondere gleich vier ist.

10. Rotor (3) nach einem der vorhergehenden Ansprüche, **dadurch gekennzeichnet, dass** die Rotorteilpakete (9,10) der einzelnen Abschnitt I bis III jeweils um einen Winkel γ gegeneinander versetzt angeordnet sind.

11. Rotor (3) nach einem der vorhergehenden Ansprüche, **dadurch gekennzeichnet, dass** eine axiale Fixierung der Reluktanzpakete (9) durch die axial unmittelbar angrenzenden Permanentmagnetpakete (10) erfolgt.

12. Dynamoelektrische Maschine mit einem Rotor (3) nach einem der vorhergehenden Ansprüche.

13. E-Car oder High-Speed-Generatoren mit einer dynamoelektrischen Maschine (1) nach Anspruch 12.

## FIG 1

## FIG 2

FIG 3

FIG 4

FIG 5

FIG 6

EP 2 991 207 A1

FIG 7

9

# FIG 8

# FIG 9

Europäisches
Patentamt

European
Patent Office

Office européen
des brevets

# EUROPÄISCHER RECHERCHENBERICHT

Nummer der Anmeldung

EP 14 18 2766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 1 289 101 A2 (MATSUSHITA ELECTRIC IND CO LTD [JP]) 5. März 2003 (2003-03-05)<br>* Absatz [0025] - Absatz [0031] *<br>* Absatz [0048] *<br>----- | 1-3,6,7,<br>9-13<br>4,5,8 | INV.<br>H02K29/03<br>H02K1/24<br>H02K1/27<br>H02K16/02<br>H02K19/10 |
| Y | EP 2 704 294 A1 (SIEMENS AG [DE]) 5. März 2014 (2014-03-05)<br>* Absätze [0021], [0042] *<br>----- | 4,5 | |
| Y | US 6 259 181 B1 (KAWANO SHINICHIRO [JP] ET AL) 10. Juli 2001 (2001-07-10)<br>* Spalte 12, Zeile 29 - Zeile 56 *<br>----- | 8 | |
| A | EP 1 670 119 A1 (SAMSUNG ELECTRONICS CO LTD [KR]) 14. Juni 2006 (2006-06-14)<br>* Zusammenfassung *<br>----- | 1-13 | |
| A | EP 1 158 652 A2 (MATSUSHITA ELECTRIC IND CO LTD [JP]) 28. November 2001 (2001-11-28)<br>* Zusammenfassung *<br>----- | 1-13 | |

RECHERCHIERTE
SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| München | 15. April 2015 | Frapporti, Marc |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 18 2766

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2015

| Im Recherchenbericht angeführtes Patentdokument | | Datum der Veröffentlichung | Mitglied(er) der Patentfamilie | | Datum der Veröffentlichung |
|---|---|---|---|---|---|
| EP 1289101 | A2 | 05-03-2003 | CN | 1409459 A | 09-04-2003 |
| | | | DE | 60224245 T2 | 18-12-2008 |
| | | | EP | 1289101 A2 | 05-03-2003 |
| | | | JP | 2003153508 A | 23-05-2003 |
| | | | US | 2003042814 A1 | 06-03-2003 |
| EP 2704294 | A1 | 05-03-2014 | CN | 203562916 U | 23-04-2014 |
| | | | EP | 2704294 A1 | 05-03-2014 |
| US 6259181 | B1 | 10-07-2001 | CN | 1250553 A | 12-04-2000 |
| | | | DE | 69811057 D1 | 06-03-2003 |
| | | | DE | 69811057 T2 | 27-11-2003 |
| | | | DE | 69816675 D1 | 28-08-2003 |
| | | | DE | 69816675 T2 | 29-01-2004 |
| | | | EP | 0966784 A1 | 29-12-1999 |
| | | | EP | 1111755 A1 | 27-06-2001 |
| | | | US | 6259181 B1 | 10-07-2001 |
| | | | US | 6300703 B1 | 09-10-2001 |
| | | | WO | 9840952 A1 | 17-09-1998 |
| EP 1670119 | A1 | 14-06-2006 | CN | 1787333 A | 14-06-2006 |
| | | | EP | 1670119 A1 | 14-06-2006 |
| | | | JP | 2006166688 A | 22-06-2006 |
| | | | KR | 20060064310 A | 13-06-2006 |
| EP 1158652 | A2 | 28-11-2001 | CN | 1325172 A | 05-12-2001 |
| | | | DE | 60130600 T2 | 07-02-2008 |
| | | | EP | 1158652 A2 | 28-11-2001 |
| | | | US | 2002047429 A1 | 25-04-2002 |

EPO FORM P0461

Für nähere Einzelheiten zu diesem Anhang : siehe Amtsblatt des Europäischen Patentamts, Nr.12/82